# EUROPÄISCHE PATENTANMELDUNG

(11) **EP 4 552 907 A1**
(43) Veröffentlichungstag der Anmeldung: **14.05.2025**
(21) Anmeldenummer: 24211644.0
(22) Anmeldetag: 08.11.2024
(51) Int. Cl.: B60L 53/10, B60L 53/14, B60L 53/30, B60L 53/302, H02M 1/12, H02M 1/14, H02M 3/337

(54) **SCHNELLLADESTATION FÜR ELEKTROFAHRZEUGE**

(30) Priorität: 08.11.2023 DE 102023130954
(71) Anmelder: Compleo Charging Solutions GmbH & Co. KG, 58513 Lüdenscheid (DE)
(72) Erfinder: REISING, Viktor, 58706 Menden (DE); AL NOURI, Refaat, 44328 Dortmund (DE); BRÄTSCH, Sebastian, 45659 Recklinghausen (DE)
(74) Vertreter: Gottschald Patentanwälte Partnerschaft mbB

(57) **Zusammenfassung**

Die Erfindung betrifft eine Schnellladestation für Elektrofahrzeuge, wobei die Schnellladestation (1) mehrere Leistungsmodule (3) aufweist, wobei die Schnellladestation (1) mindestens einen Wechselspannungseingang (5) und mindestens zwei Anschlusspunkte (2) als Gleichspannungsausgänge aufweist, wobei die Leistungsmodule (3) zumindest teilweise flexibel auf die Anschlusspunkte (2) aufteilbar sind, wobei jedes der Leistungsmodule (3) eine Stromrichteranordnung (6) zur Wandlung einer Wechselspannung als Eingangsspannung der Schnellladestation (1) in eine Gleichspannung als Ausgangsspannung der Schnellladestation (1) aufweist, wobei Schnellladestation (1) mindestens eine Filterstufe (7) mit induktivem Anteil zwischen dem Wechselspannungseingang (5) und den Anschlusspunkten (2) aufweist, wobei bezüglich der Anschlusspunkte (2) eine der Filterstufen (7) als letzte induktive Filterstufe (7) ausgestaltet, sodass hinter der letzten Filterstufe (7) keine weitere Filterstufe (7) mit induktivem Anteil vor dem Elektrofahrzeug verbaut ist. Es wird vorgeschlagen, dass die letzte Filterstufe (7) auf die Leistungsmodule (3) aufgeteilt ist, dass jedes Leistungsmodul (3) eine Subfilterstufe (8) der letzten Filterstufe (7) aufweist, sodass die Subfilterstufen (8) zusammen mit den Leistungsmodulen (3) flexibel auf die Anschlusspunkte (2) verteilt werden und je nach Verteilung zu unterschiedlichen letzte Filterstufen (7) pro Anschlusspunkt (2) zusammengeschaltet werden.

## Beschreibung

Die vorliegende Erfindung betrifft eine Schnellladestation für Elektrofahrzeuge gemäß dem Oberbegriff von Anspruch 1 sowie eine Verwendung einer Schnellladestation gemäß Anspruch 13.

Schnellladestationen, auch bekannt als high performance charger, sind Gleichstromladestationen für elektrische Fahrzeuge, insbesondere Automobile, aber auch Lastkraftfahrzeuge, Schiffe und dergleichen.

Der bekannte Stand der Technik (EP 2 751 902 A1), von dem die Erfindung ausgeht, betrifft eine Schnellladestation gemäß dem Oberbegriff von Anspruch 1.

Bei dieser Schnellladestation sind mehrere Leistungsmodule vorgesehen. Die Leistungsmodule können flexibel auf Anschlusspunkte der Schnellladestation aufgeteilt werden. Das hat den Vorteil, dass bei nur einseitiger Belegung der Schnellladestation die gesamte Ausgangsleistung auf dieser einen Seite zur Verfügung steht. In der Regel ruft ein Elektrofahrzeug seine maximale Ladeleistung nur kurzzeitig ab. Die Leistungsmodule können also bei Belegung mehrerer Anschlusspunkte auf die Anschlusspunkte verteilt werden, sodass insgesamt nicht für alle Anschlusspunkte die volle Leistung exklusiv zur Verfügung steht und trotzdem in den meisten Fällen die Elektrofahrzeuge ohne Drosselung geladen werden können.

In der Regel weist eine Schnellladestation mindestens eine Filterstufe mit induktivem Anteil zwischen dem Wechselspannungseingang und den Anschlusspunkten auf, um Netzstörungen und/oder eigene Störungen, insbesondere durch Schaltvorgänge einer Stromrichteranordnung, zu filtern. Bei einer Schnellladestation wie der genannten kann eine letzte Filterstufe vor dem Gleichstromausgang eines Anschlusspunkts direkt am Anschlusspunkt vorgesehen sein. Das hat den Nachteil, dass diese Filterstufe auf die maximale Leistung des Anschlusspunktes ausgelegt sein muss. Bei zwei Anschlusspunkten sind dann zwei Filterstufen vorhanden, die jeweils auf die Summe der Leistung aller Leistungsmodule ausgelegt sind, obwohl meist nur eine Untermenge der Leistungsmodule tatsächlich mit dem Anschlusspunkt verbunden sind.

Es ist dabei eine Herausforderung, die Filterung im bekannten Stand der Technik zu verbessern.

Der Erfindung liegt das Problem zugrunde, die bekannten Schnellladestationen derart auszugestalten und weiterzubilden, dass die induktive Filterung kostengünstiger und effizienter erreicht wird.

Das obige Problem wird durch die Merkmale des kennzeichnenden Teils von Anspruch 1 gelöst.

Wesentlich ist die grundsätzliche Überlegung, dass die letzte Filterstufe auf die Leistungsmodule aufgeteilt wird und so mit den Leistungsmodulen auf die Anschlusspunkte verteilt wird. Die an einem Anschlusspunkt vorliegende Filtergröße, zusammengesetzt aus Subfilterstufen der Leistungsmodule, ist somit immer an die am Anschlusspunkt vorliegende Leistung angepasst. Die insgesamt benötigte Menge an summierten Filterinduktivitäten und Kapazitäten wird so reduziert. Gegenüber einer Filterstufe pro Anschlusspunkt bei zwei Anschlusspunkten kann der Aufwand so etwa halbiert werden.

Im Einzelnen wird vorgeschlagen, dass die letzte Filterstufe auf die Leistungsmodule aufgeteilt ist, dass jedes Leistungsmodul eine Subfilterstufe der letzten Filterstufe aufweist, sodass die Subfilterstufen zusammen mit den Leistungsmodulen flexibel auf die Anschlusspunkte verteilt werden und je nach Verteilung zu unterschiedlichen letzte Filterstufen pro Anschlusspunkt zusammengeschaltet werden.

Bei einer Ausgestaltung gemäß Anspruch 2 wird vorgeschlagen, dass die Subfilterstufen Gegentakt- und Gleichtaktstörungen induktiv filtern. Im Folgenden werden aufgrund großer Verbreitung die englischen Begriffe differential mode (DM) und common mode (CM) verwendet.

Anspruch 3 betrifft dann die besonders bevorzugte Ausgestaltung, wonach eine CM Drossel und eine DM Drossel integriert ausgestaltet sind. Im Leistungsmodul ist zumeist wenig Bauraum vorhanden. So wird weniger Bauraum benötigt und da die Drosseln jeweils nur den Ausgang eines Leistungsmoduls und nicht aller Leistungsmodule filtern müssen, können diese kleiner ausgestaltet und besser integriert werden. Eine dedizierte zweite common mode bzw. differential mode Drossel entfällt somit vorzugsweise. Auch X-Kondensatoren können so kleiner und damit günstiger und platzsparender ausgestaltet werden. Bevorzugt teilen sich die Drosseln dafür einen magnetischen Kern. Um die Toleranzen bei der Herstellung der Drosseln besser in den Griff zu bekommen, wird vorgeschlagen, zwei integrierte Drosseln zu verwenden (Anspruch 4).

Die gleichen genannten Vorteile lassen sich auch eingangsseitig erzielen (Ansprüche 5 und 6). Anspruch 7 betrifft eine bevorzugte konstruktive Ausgestaltung der integrierten Drossel. Zur Verteilung der Leistungsmodule auf die Anschlusspunkte ist bei einer Ausgestaltung gemäß Anspruch 8 eine Schaltmatrix vorgesehen.

Eine weitere besonders bevorzugte Ausgestaltung gemäß Anspruch 9 sieht vor, dass die Schnellladestation Modulslots für die Leistungsmodule aufweist, in denen Leistungsmodule angeordnet sein können, jedoch nicht müssen. Das ermöglicht den Verkauf von Schnellladestationen in unterschiedlichen Leistungskonfigurationen und den flexiblen Nachkauf von Leistungsmodulen. In diesem Fall ist die vorgeschlagene Aufteilung der Filterstufen besonders effizient. Sind weniger Leistungsmodule vorhanden, sind automatisch weniger Subfilterstufen vorhanden und die Kosten für die Filterstufen sind insgesamt reduziert.

Anspruch 10 betrifft ein Gehäuse des Leistungsmoduls, das vorzugsweise die Stromrichteranordnung und die Filterstufen aufnimmt. Gemäß Anspruch 11 kann die Stromrichteranordnung einen DC/DC Wandler aufweisen, der im Buck-Betrieb und im Boost-Betrieb nutzbar ist. Die Änderungen der Spannung eines solchen DC/DC Wandlers stellen besondere Anforderungen an die Filterstufen.

Eine Ausgestaltung gemäß Anspruch 12 sieht vor, dass eine Gleichtaktankopplung bei einem T-Typ AC/DC Wandler in der Stromrichteranordnung verwendet wird, wodurch das Filterkonzept insgesamt verbessert wird.

Nach einer weiteren Lehre gemäß Anspruch 13, der eigenständige Bedeutung zukommt, wird eine Verwendung einer vorschlagsgemäßen Schnellladestation zum Laden eines Elektrofahrzeugs mit mindestens einem nicht belegten Modulslot beansprucht.

Auf alle Ausführungen zu der vorschlagsgemäßen Schnellladestation darf verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße Schnellladestation,
- Fig. 2: einen Blick in die Schnellladestation und auf die Leistungsmodule,
- Fig. 3: eine Schaltmatrix und Leistungsmodule,
- Fig. 4: eine Dual Mode Drossel,
- Fig. 5: einen DC/DC Wandler inklusive Verbindungskreiskondensatoren und
- Fig. 6: einen AC/DC Wandler inklusive der selben Verbindungskreiskondensatoren.

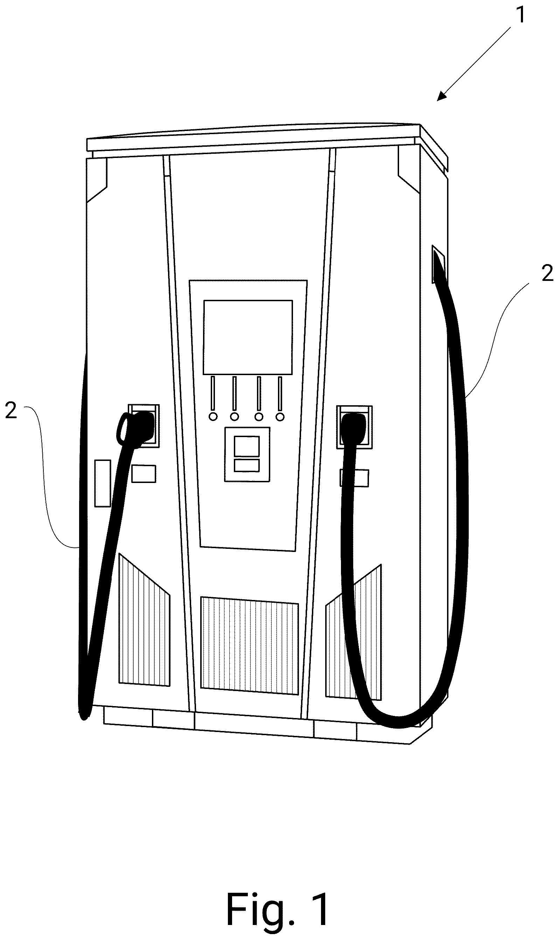

Fig. 1 zeigt eine Außenansicht einer vorschlagsgemäßen Schnellladestation 1 für Elektrofahrzeuge. Diese weist zwei Anschlusspunkte 2 für Elektrofahrzeuge, hier fest angeschlagene Ladekabel, auf. Eine Schnellladestation 1 dient zum Laden eines Elektrofahrzeugs mittels Gleichstroms und einer Leistung von zumeist mindestens 50 kW. Üblicherweise ist die Schnellladestation 1 dafür an ein Wechselstromnetz angeschlossen.

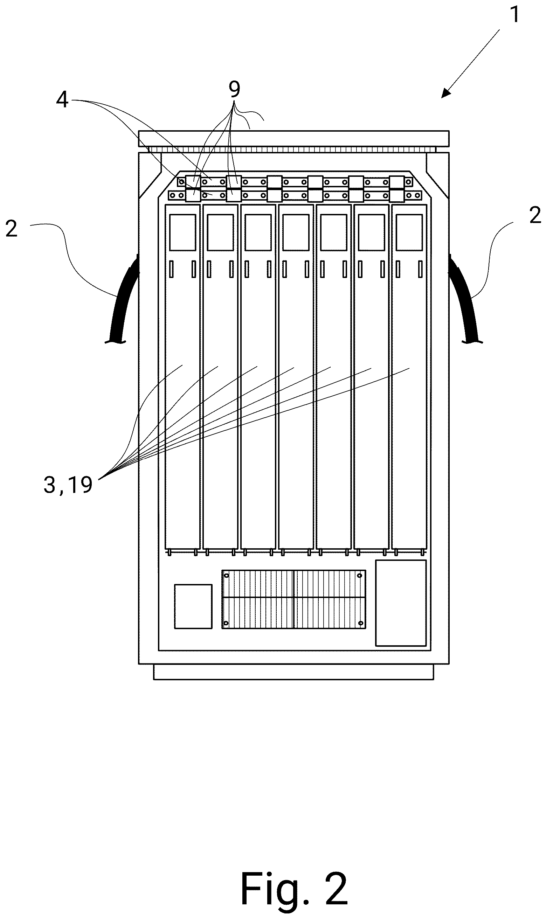

Wie in der geöffneten Ansicht in Fig. 2 erkennbar ist, weist die Schnellladestation 1 mehrere einzeln handhabbare Leistungsmodule 3 auf. Hier weist die Schnellladestation 1 sieben Leistungsmodule 3 auf, die jeweils einen Teil der Gesamtleistung der Schnellladestation 1 zur Verfügung stellen, hier beispielsweise jeweils 30 kW. Die Leistungsmodule 3 können hier und vorzugsweise alle flexibel auf die Anschlusspunkte 2 aufgeteilt werden.

Der Begriff "einzeln handhabbar" ist hier breit zu verstehen. Das Leistungsmodul 3 wiegt hier beispielsweise etwa 39 kg, ist also nicht leicht handhabbar. Es ist jedoch einzeln herausnehmbar und die Komponenten des Leistungsmoduls 3 sind gerade nicht einzeln in der Schnellladestation 1 verbaut.

Erkennbar sind im oberen Bereich der Schnellladestation 1 Gleichspannungsschienen 4 zur Verteilung der Ausgangsleistung der Leistungsmodule 3 auf die Anschlusspunkte 2. Der Wechselspannungseingang 5 ist hier im unteren Bereich angeordnet und in Figs. 1 und 2 nicht dargestellt.

Das in den Figuren dargestellte und insoweit bevorzugte Ausführungsbeispiel betrifft eine Schnellladestation 1 für Elektrofahrzeuge, wobei die Schnellladestation 1 mehrere Leistungsmodule 3 aufweist, wobei die Schnellladestation 1 mindestens einen Wechselspannungseingang 5 und mindestens zwei Anschlusspunkte 2 als Gleichspannungsausgänge aufweist, wobei die Leistungsmodule 3 zumindest teilweise flexibel auf die Anschlusspunkte 2 aufteilbar sind. Jedes der Leistungsmodule 3 weist eine Stromrichteranordnung 6 zur Wandlung einer Wechselspannung als Eingangsspannung der Schnellladestation 1 in eine Gleichspannung als Ausgangsspannung der Schnellladestation 1 auf.

Die Schnellladestation 1 weist mindestens eine Filterstufe 7 mit induktivem Anteil zwischen dem Wechselspannungseingang 5 und den Anschlusspunkten 2 auf. Mittels der Filterstufe 7 werden fremde und eigene Störungen geglättet, die zum Beispiel durch Schaltvorgänge in der Leistungselektronik entstehen.

Bezüglich der Anschlusspunkte 2 ist eine der Filterstufen 7 als letzte induktive Filterstufe 7 ausgestaltet, sodass hinter der letzten Filterstufe 7 keine weitere Filterstufe 7 mit induktivem Anteil vor dem Elektrofahrzeug verbaut ist.

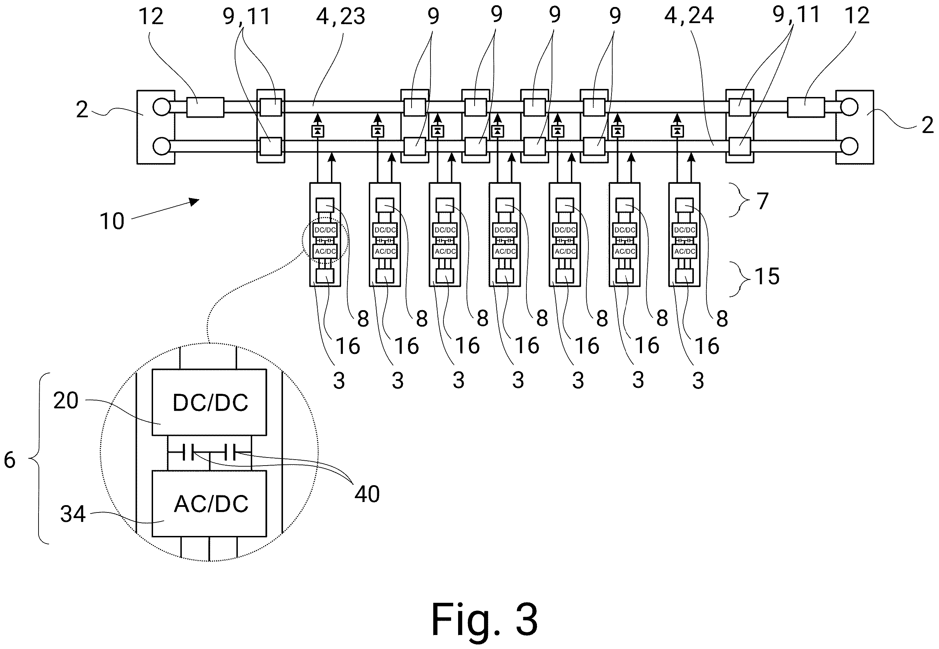

Wesentlich ist nun, dass die letzte Filterstufe 7 auf die Leistungsmodule 3 aufgeteilt ist. Fig. 3 zeigt einen schematischen Blick in die Leistungsmodule 3. Die Aufteilung ist so vorgenommen, dass jedes Leistungsmodul 3 eine Subfilterstufe 8 der letzten Filterstufe 7 aufweist, sodass die Subfilterstufen 8 zusammen mit den Leistungsmodulen 3 flexibel auf die Anschlusspunkte 2 verteilt werden und je nach Verteilung zu unterschiedlichen letzten Filterstufen 7 pro Anschlusspunkt 2 zusammengeschaltet werden.

Die Gleichspannungsschienen 4 sind hier und vorzugsweise durch Schalter 9, hier Schütze, derart unterbrochen bzw. unterbrechbar, dass die Gleichspannungsschienen 4 in zwei beliebig lange Stränge an Leistungsmodulen 3 aufteilbar sind, die den beiden Anschlusspunkten 2 zugeordnet sind. Es können also beispielsweise alle Leistungsmodule 3 einem Anschlusspunkt 2 zugeordnet werden oder die Gleichspannungsschienen 4 werden irgendwo zwischen den Anschlusspunkten 2 aufgetrennt und es entstehen so zwei Stränge. Die Anordnung der Schalter 9 wird daher als Schaltmatrix 10 bezeichnet.

Weiter zeigt Fig. 3 hier und vorzugsweise vorhandene Ausgangsschalter 11 pro Anschlusspunkt 2 und eine ebenfalls vorzugsweise vorhandene Ausgangssicherung 12 pro Anschlusspunkt 2. Die äußeren beiden Leistungsmodule 3 sind gemäß Fig. 3 und vorzugsweise nicht getrennt einem Anschlusspunkt 2 zuordenbar, sodass zwar einem Anschlusspunkt 2 alle Leistungsmodule 3 zugeordnet werden können, bei Verwendung beider Anschlusspunkte 2 aber mindestens zwei Leistungsmodule 3 einem Anschlusspunkt 2 zugeordnet sind.

Hier und vorzugsweise weisen die Subfilterstufen 8 jeweils eine common mode (CM) Drossel und eine differential mode (DM) Drossel auf.

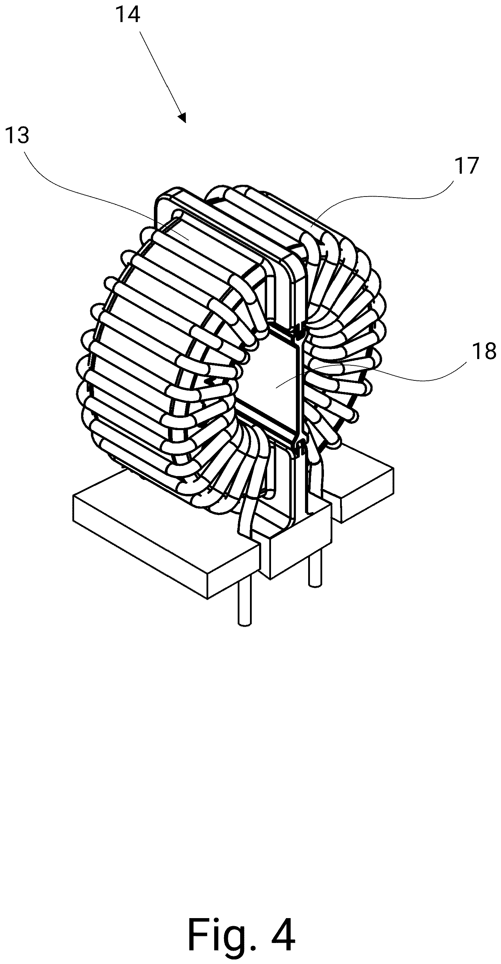

Besonders bevorzugt ist dabei, dass die CM Drossel und die DM Drossel integriert sind. Möglichkeiten der Integration von CM Drossel und DM Drossel sind bekannt. Beispielsweise werden in "A Magnetic Structure Integrating Differential-Mode and Common-Mode Inductors with Improved Tolerance to DC Saturation" von Umetami et. al., IEEJ Journal of Industry Applications, Vol.4 No.3 pp.166-173 DOI: 10.1541/ieejjia.4.166 mehrere Wege besprochen, wie eine solche Integration erreicht werden kann. Hier und vorzugsweise ist es so, dass die CM Drossel und die DM Drossel über einen gemeinsamen magnetischen Kern 13 integriert sind. Das Ergebnis der Integration kann auch als dual mode Drossel 14 bezeichnet werden. Eine solche dual mode Drossel 14 zeigt Fig. 4.

Ebenfalls bevorzugt ist, dass die Subfilterstufen 8 jeweils zwei CM Drosseln und zwei DM Drosseln aufweisen, von denen jeweils eine DM Drossel und eine CM Drossel integriert ausgestaltet sind. Die Verwendung von zwei dual mode Drosseln 14 vereinfacht den Umgang mit Toleranzen, da die Einflüsse der Toleranzen sich in der Regel nicht addieren. Grundsätzliche Verschaltungen für Filterstufen 7 wie die vorgeschlagene sind bekannt und werden daher hier nicht näher beleuchtet.

Weiter ist hier und vorzugsweise vorgesehen, dass die Schnellladestation 1 eine induktive Eingangsfilterstufe 15 aufweist, die vorzugsweise als erste induktive Eingangsfilterstufe 15 ausgestaltet ist, dass die Eingangsfilterstufe 15 auf die Leistungsmodule 3 aufgeteilt ist, dass jedes Leistungsmodul 3 eine Subeingangsfilterstufe 16 der Eingangsfilterstufe 15 aufweist, sodass die Subeingangsfilterstufe 16 zusammen mit den Leistungsmodulen 3 flexibel auf die Anschlusspunkte 2 verteilt werden und je nach Verteilung zu unterschiedlichen Eingangsfilterstufen 15 pro Anschlusspunkt 2 zusammengeschaltet werden. Es wird zwar in der Regel nur ein Wechselspannungseingang 5 vorgesehen sein, allerdings vereinfacht die Aufteilung der Eingangsfilterstufe 15 die Produktion der Schnellladestation 1, da die Eingangsfilterstufe 15 mit vielen weiteren Komponenten in den Leistungsmodulen 3 bestückt werden kann und nicht separat in der Schnellladestation 1 angeschlossen werden muss. Auch wenn weniger Leistungsmodule 3 bestückt werden, ist die Aufteilung von Vorteil.

Vorzugsweise ist es dann ebenfalls so, dass die Subeingangsfilterstufen 16 jeweils eine CM Drossel und eine DM Drossel aufweisen. Die CM Drossel und die DM Drossel können integriert sein und sind vorzugsweise über einen gemeinsamen magnetischen Kern 13 integriert. Ebenfalls können die Subeingangsfilterstufen 16 jeweils zwei CM Drosseln und zwei DM Drosseln aufweisen, von denen jeweils eine DM Drossel und eine CM Drossel integriert ausgestaltet sind.

Mit Blick auf Fig. 4 ist hier und vorzugsweise vorgesehen, dass ein gemeinsamer magnetischer Kern 13 in den Subfilterstufen 8 oder Subeingangsfilterstufen 16 rund ausgestaltet ist. Vorzugsweise sind auf zwei gegenüberliegenden Seiten des runden magnetischen Kerns Wicklungen 17 angeordnet, die voneinander beabstandet sind. Weiter vorzugsweise ist es so, dass magnetisches Material 18 in dem runden magnetischen Kern zwischen den Wicklungen 17 angeordnet ist.

Wie bereits erwähnt ist hier und vorzugsweise vorgesehen, dass die Schnellladestation 1 eine Schaltmatrix 10, insbesondere Schützmatrix, aufweist, mittels der die Leistungsmodule 3 auf die Anschlusspunkte 2 flexibel verteilt werden.

Weiter ist hier und vorzugsweise vorgesehen, dass die Schnellladestation 1 Modulslots 19 für die Leistungsmodule 3 aufweist, dass die Schnellladestation 1 eingerichtet ist, Elektrofahrzeuge an mindestens einem, vorzugsweise mindestens zwei, Anschlusspunkten 2 zu laden, wenn nicht alle Modulslots 19 mit Leistungsmodulen 3 belegt sind.

Die Leistungsmodule 3 sind im montierten Zustand, wie etwa aus Fig. 2 hervorgeht, in den Modulslots 19 angeordnet. Dabei ist jeweils ein Leistungsmodul 3 in jeweils einem der Modulslots 19 angeordnet. Es ist möglich, dass die Leistungsmodule 3 austauschbar in den Modulslots 19 angeordnet sind, um etwa bei Defekt ausgetauscht werden zu können. Es ist möglich, dass in jedem der Modulslots 19 ein Leistungsmodul 3 angeordnet ist, oder, dass nur in einem Teil der Modulslots 19 jeweils ein Leistungsmodul 3 angeordnet ist. Es ist dabei hier und vorzugsweise so, dass die Schaltmatrix 10 an die Modulslots 19 angepasst und unabhängig von der tatsächlichen Belegung ist. Es ist daher einfach möglich, eine Schnellladestation 1 nur mit einem Teil der Leistungsmodule 3 zu belegen und gegebenenfalls später nachzurüsten. So können bei der Planung eines Ladeparks zum Beispiel mehr Anschlusspunkte 2 mit weniger Leistung geplant werden und der Ladepark kann später um Leistung pro Anschlusspunkt 2 erweitert werden, wenn nötig.

Weiter ist hier und vorzugsweise vorgesehen, dass die Leistungsmodule 3 je ein Gehäuse aufweisen, dass in dem Gehäuse die Stromrichteranordnung 6 und die Subfilterstufe 8 und ggf. Subeingangsfilterstufe 16 des Leistungsmoduls 3 angeordnet ist, vorzugsweise, dass die Stromrichteranordnung 6 und die Subfilterstufe 8 und ggf. Subeingangsfilterstufe 16 gemeinsam gekühlt werden, hier und vorzugsweise durch Luft, die durch das Gehäuse des Leistungsmoduls 3 strömt.

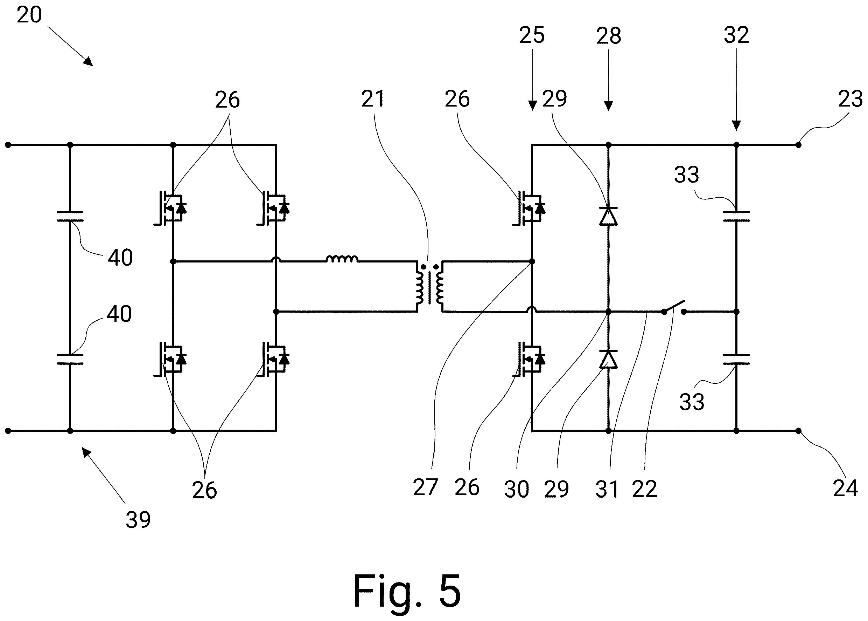

Wie in Fig. 5 dargestellt ist es hier und vorzugsweise so, dass die Stromrichteranordnung 6 einen DC/DC Wandler 20, insbesondere Dual-Active-Bridge DC/DC Wandler 20, aufweist, der eine Eingangsspannung des DC/DC Wandlers 20 herauf und herabsetzen kann.

Vorzugsweise ist es so, dass der DC/DC Wandler 20 in einem ersten Funktionszustand eine ausgangsseitige Wechselspannung des Transformators 21 gleichrichtet und in einem zweiten Funktionszustand als Ladungspumpe fungiert und die ausgangsseitige Wechselspannung des Transformators 21 gleichrichtet und erhöht, insbesondere verdoppelt. Der DC/DC Wandler 20 ist vorliegend eine abgewandelte Dual-Active-Bridge. Wird ein dargestelltes Schaltelement 22 geschlossen, fungiert die Ausgangsseite als Ladungspumpe. Ist das Schaltelement 22 geöffnet, wird die Ausgangsspannung des Transformators 21 nur gleichgerichtet. Hier und vorzugsweise stellt der DC/DC Wandler 20 eine galvanische Trennung bereit. Zum weiteren Verständnis wird auch auf die EP 4 109 724 A1 verwiesen.

Im Detail ist hier und vorzugsweise vorgesehen, dass der DC/DC Wandler 20 ausgangsseitig einen DC+ Anschluss 23 und einen DC- Anschluss 24 aufweist, dass der DC/DC Wandler 20 ausgangsseitig einen ersten Schaltungszweig 25 zwischen dem DC+ Anschluss 23 und dem DC- Anschluss 24 aufweist, der zwei in Reihe geschaltete Halbleiterschaltelemente 26, insbesondere Transistoren, aufweist, zwischen denen ein erster ausgangsseitiger Anschluss 27 des Transformators 21 angeschlossen ist, dass der DC/DC Wandler 20 ausgangsseitig einen zweiten Schaltungszweig 28 zwischen dem DC+ Anschluss 23 und dem DC- Anschluss 24 aufweist, der zwei in Reihe geschaltete Halbleiterbauelemente 29, insbesondere Dioden, aufweist, zwischen denen ein zweiter ausgangsseitiger Anschluss 30 des Transformators 21 und ein Verbindungszweig 31 angeschlossen sind, dass der DC/DC Wandler 20 ausgangsseitig einen dritten Schaltungszweig 32 zwischen dem DC+ Anschluss 23 und dem DC- Anschluss 24 aufweist, der zwei in Reihe geschaltete Kondensatoren 33 aufweist, zwischen denen der Verbindungszweig 31 angeschlossen ist, dass der Verbindungszweig 31 ein Schaltelement 22 aufweist, mit dem der Verbindungszweig 31 geschlossen und aufgetrennt werden kann, wodurch ein Wechsel zwischen den Funktionszuständen bewirkt wird. Im ersten Funktionszustand ist das Schaltelement 22 hier und vorzugsweise offen, im zweiten geschlossen. Statt der Dioden können insbesondere auch Transistoren vorgesehen sein, wodurch eine bidirektionale Verwendung ermöglicht werden kann. Das Schaltelement 22 kann ein Relais oder ein Schütz oder ein Halbleiterschaltelement 26 sein.

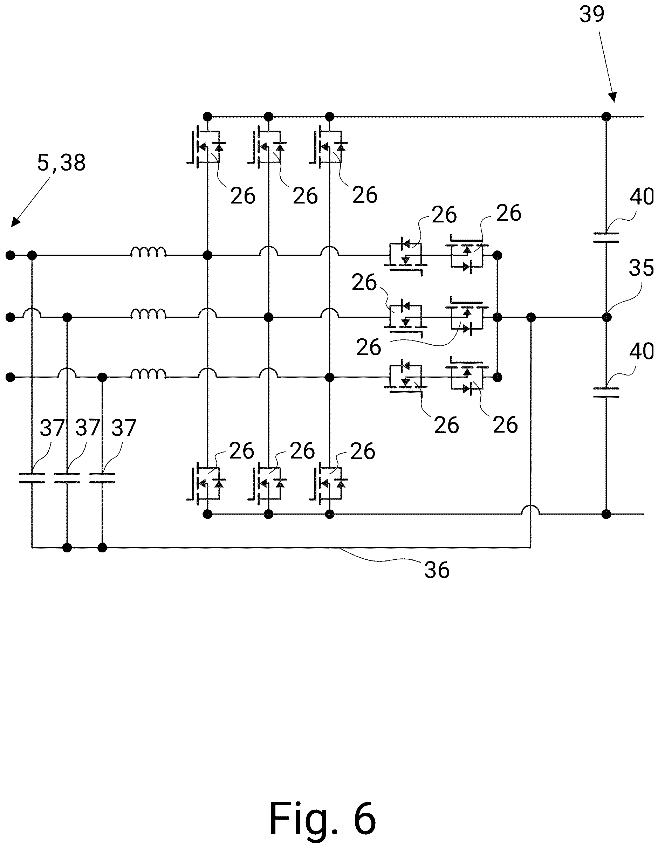

Weiter und in Fig. 6 dargestellt ist hier und vorzugsweise vorgesehen, dass die Stromrichteranordnung 6 einen T-Typ AC/DC Wandler 34 aufweist, dass der AC/DC Wandler 34 einen Neutralpunkt 35 und einen DC Ausgang mit Neutralpunktanbindung 36 aufweist, dass der Neutralpunkt 35 über mindestens einen, vorzugsweise drei, Kopplungskondensatoren 37 an den Eingang des AC/DC Wandlers 38 gekoppelt ist, vorzugsweise, dass der Neutralpunkt 35 über je einen Kopplungskondensator 37 an drei Phasen des Eingangs des AC/DC Wandlers 38 gekoppelt ist. Hier und vorzugsweise handelt es sich bei dem T-Typ AC/DC Wandler 34 um einen Vienna Gleichrichter. Eine solche Gleichtaktankopplung reduziert die selbstverursachten Störungen, wodurch die Regeldynamik der Stromrichteranordnung 6 verbessert wird. Gleichzeitig können dadurch die Subfilterstufen 8 kleiner dimensioniert werden und die Bauraumanforderungen werden besser erfüllt. Der AC/DC Wandler 34 und der DC/DC Wandler 20 sind hier und vorzugsweise über einen Verbindungskreis 39 verbunden, der zwei Verbindungskreiskondensatoren 40 aufweist. Die Verbindungskreiskondensatoren 40 in Fig. 5 und Fig. 6 sind die selben Verbindungskreiskondensatoren 40.

Vorgeschlagen wird gemäß einer weiteren Lehre eine Verwendung einer vorschlagsgemäßen Schnellladestation 1 zum Laden eines Elektrofahrzeugs mit mindestens einem nicht belegten Modulslot 19.

Auf alle Ausführungen zu der vorschlagsgemäßen Schnellladestation 1 darf verwiesen werden.

### Bezugszeichenliste

- 1: Schnellladestation
- 2: Anschlusspunkt
- 3: Leistungsmodul
- 4: Gleichspannungsschiene
- 5: Wechselspannungseingang
- 6: Stromrichteranordnung
- 7: Filterstufe
- 8: Subfilterstufe
- 9: Schalter
- 10: Schaltmatrix
- 11: Ausgangsschalter
- 12: Ausgangssicherung
- 13: gemeinsamer magnetischer Kern
- 14: dual mode Drossel
- 15: Eingangsfilterstufe
- 16: Subeingangsfilterstufe
- 17: Wicklung
- 18: magnetisches Material
- 19: Modulslot
- 20: DC/DC Wandler
- 21: Transformator
- 22: Schaltelement
- 23: DC+ Anschluss
- 24: DC- Anschluss
- 25: erster Schaltungszweig
- 26: Halbleiterschaltelement
- 27: erster ausgangsseitiger Anschluss
- 28: zweiter Schaltungszweig
- 29: Halbleiterbauelement
- 30: zweiter ausgangsseitiger Anschluss
- 31: Verbindungszweig
- 32: dritter Schaltungszweig
- 33: Kondensator
- 34: AC/DC Wandler
- 35: Neutralpunkt
- 36: Neutralpunktanbindung
- 37: Kopplungskondensator
- 38: Eingang des AC/DC Wandlers
- 39: Verbindungskreis
- 40: Verbindungskreiskondensator

## Patentansprüche

1. Schnellladestation für Elektrofahrzeuge, wobei die Schnellladestation (1) mehrere Leistungsmodule (3) aufweist, wobei die Schnellladestation (1) mindestens einen Wechselspannungseingang (5) und mindestens zwei Anschlusspunkte (2) als Gleichspannungsausgänge aufweist, wobei die Leistungsmodule (3) zumindest teilweise flexibel auf die Anschlusspunkte (2) aufteilbar sind, wobei jedes der Leistungsmodule (3) eine Stromrichteranordnung (6) zur Wandlung einer Wechselspannung als Eingangsspannung der Schnellladestation (1) in eine Gleichspannung als Ausgangsspannung der Schnellladestation (1) aufweist,
wobei Schnellladestation (1) mindestens eine Filterstufe (7) mit induktivem Anteil zwischen dem Wechselspannungseingang (5) und den Anschlusspunkten (2) aufweist,
wobei bezüglich der Anschlusspunkte (2) eine der Filterstufen (7) als letzte induktive Filterstufe (7) ausgestaltet, sodass hinter der letzten Filterstufe (7) keine weitere Filterstufe (7) mit induktivem Anteil vor dem Elektrofahrzeug verbaut ist,
**dadurch gekennzeichnet,**
**dass** die letzte Filterstufe (7) auf die Leistungsmodule (3) aufgeteilt ist, dass jedes Leistungsmodul (3) eine Subfilterstufe (8) der letzten Filterstufe (7) aufweist, sodass die Subfilterstufen (8) zusammen mit den Leistungsmodulen (3) flexibel auf die Anschlusspunkte (2) verteilt werden und je nach Verteilung zu unterschiedlichen letzte Filterstufen (7) pro Anschlusspunkt (2) zusammengeschaltet werden.

2. Schnellladestation nach Anspruch 1, **dadurch gekennzeichnet, dass** die Subfilterstufen (8) jeweils eine common mode (CM) Drossel und eine differential mode (DM) Drossel aufweisen.

3. Schnellladestation nach Anspruch 2, **dadurch gekennzeichnet, dass** die CM Drossel und die DM Drossel integriert sind, vorzugsweise, dass die CM Drossel und die DM Drossel über einen gemeinsamen magnetischen Kern (13) integriert sind.

4. Schnellladestation nach Anspruch 3, **dadurch gekennzeichnet, dass** die Subfilterstufen (8) jeweils zwei CM Drosseln und zwei DM Drosseln aufweisen, von denen jeweils eine DM Drossel und eine CM Drossel integriert ausgestaltet sind.

5. Schnellladestation nach einem der vorhergehenden Ansprüche, **dadurch gekennzeichnet, dass** die Schnellladestation (1) eine induktive Eingangsfilterstufe (15) aufweist, die vorzugsweise als erste induktive Eingangsfilterstufe (15) ausgestaltet ist, dass die Eingangsfilterstufe (15) auf die Leistungsmodule (3) aufgeteilt ist, dass jedes Leistungsmodul (3) eine Subeingangsfilterstufe (16) der Eingangsfilterstufe (15) aufweist, sodass die Subeingangsfilterstufe (16) zusammen mit den Leistungsmodulen (3) flexibel auf die Anschlusspunkte (2) verteilt werden und je nach Verteilung zu unterschiedlichen Eingangsfilterstufen (15) pro Anschlusspunkt (2) zusammengeschaltet werden.

6. Schnellladestation nach Anspruch 5, **dadurch gekennzeichnet, dass** die Subeingangsfilterstufen (16) jeweils eine CM Drossel und eine DM Drossel aufweisen, vorzugsweise, dass die CM Drossel und die DM Drossel integriert sind, weiter vorzugsweise, dass die CM Drossel und die DM Drossel über einen gemeinsamen magnetischen Kern (13) integriert sind, weiter vorzugsweise, dass die Subeingangsfilterstufen (16) jeweils zwei CM Drosseln und zwei DM Drosseln aufweisen, von denen jeweils eine DM Drossel und eine CM Drossel integriert ausgestaltet sind.

7. Schnellladestation nach einem der Ansprüche 3 bis 6, **dadurch gekennzeichnet, dass** ein gemeinsamer magnetischer Kern (13) in den Subfilterstufen (8) oder Subeingangsfilterstufen (16) rund ausgestaltet ist, vorzugsweise, dass auf zwei gegenüberliegenden Seiten des runden magnetischen Kerns Wicklungen (17) angeordnet sind, die voneinander beabstandet sind, weiter vorzugsweise, dass magnetisches Material (18) in dem runden magnetischen Kern zwischen den Wicklungen (17) angeordnet ist.

8. Schnellladestation nach einem der vorhergehenden Ansprüche, **dadurch gekennzeichnet, dass** die Schnellladestation (1) eine Schaltmatrix (10), insbesondere Schützmatrix, aufweist, mittels der die Leistungsmodule (3) auf die Anschlusspunkte (2) flexibel verteilt werden.

9. Schnellladestation nach einem der vorhergehenden Ansprüche, **dadurch gekennzeichnet, dass** die Schnellladestation (1) Modulslots (19) für die Leistungsmodule (3) aufweist, dass die Schnellladestation (1) eingerichtet ist, Elektrofahrzeuge an mindestens einem, vorzugsweise mindestens zwei, Anschlusspunkten (2) zu laden, wenn nicht alle Modulslots (19) mit Leistungsmodulen (3) belegt sind.

10. Schnellladestation nach einem der vorhergehenden Ansprüche, **dadurch gekennzeichnet, dass** die Leistungsmodule (3) je ein Gehäuse aufweisen, dass in dem Gehäuse die Stromrichteranordnung (6) und die Subfilterstufe (8) und ggf. Subeingangsfilterstufe (16) des Leistungsmoduls (3) angeordnet ist, vorzugsweise, dass die Stromrichteranordnung (6) und die Subfilterstufe (8) und ggf. Subeingangsfilterstufe (16) gemeinsam gekühlt werden.

11. Schnellladestation nach einem der vorhergehenden Ansprüche, **dadurch gekennzeichnet, dass** die Stromrichteranordnung (6) einen DC/DC Wandler (20), insbesondere Dual-Active-Bridge DC/DC Wandler (20), aufweist, der eine Eingangsspannung des DC/DC Wandlers (20) herauf und herabsetzen kann.

12. Schnellladestation nach einem der vorhergehenden Ansprüche, **dadurch gekennzeichnet, dass** die Stromrichteranordnung (6) einen T-Typ AC/DC Wandler (34) aufweist, dass der AC/DC Wandler (34) einen Neutralpunkt (35) und einen DC Ausgang mit Neutralpunktanbindung (36) aufweist, dass der Neutralpunkt (35) über mindestens einen, vorzugsweise drei, Kopplungskondensatoren (37) an den Eingang des AC/DC Wandlers (38) gekoppelt ist, vorzugsweise, dass der Neutralpunkt (35) über je einen Kopplungskondensator (37) an drei Phasen des Eingangs des AC/DC Wandlers (38) gekoppelt ist.

13. Verwendung einer Schnellladestation (1) nach Anspruch 9 zum Laden eines Elektrofahrzeugs mit mindestens einem nicht belegten Modulslot (19).
